# EUROPEAN PATENT SPECIFICATION

(11) **EP 2 924 588 B1**
(45) Date of publication and mention of the grant of the patent: **21.08.2019**
(21) Application number: 13857146.8
(22) Date of filing: 28.10.2013
(51) Int. Cl.: G06F 16/21, G06F 16/242, G06F 16/28, G06F 16/9038, G06F 16/248

(54) **REPORT CREATION METHOD, DEVICE AND SYSTEM**
BERICHTERZEUGUNGSVERFAHREN, -VORRICHTUNG UND -SYSTEM
PROCÉDÉ, DISPOSITIF ET SYSTÈME DE CRÉATION DE RAPPORT

(30) Priority: 26.11.2012 CN 201210485311
(43) Date of publication of application: 30.09.2015
(73) Proprietor: ZTE Corporation, Shenzhen, Guangdong 518057 (CN)
(72) Inventor: WANG, Chun, Shenzhen Guangdong 518057 (CN); ZHAO, Liyang, Shenzhen Guangdong 518057 (CN)
(74) Representative: Markfort, Iris-Anne Lucie
(86) International application number: PCT/CN2013/086062
(87) International publication number: WO 2014/079304

(56) References cited:
- CN-A- 101 770 449
- CN-A- 102 722 533
- CN-A- 103 020 158
- US-A1- 2005 034 064
- US-A1- 2009 222 476
- US-B1- 7 840 600
- ZHANG, JIAN.: 'Design and implementation of WEB report tool based on BI' CHINA MASTER'S THESES FULL-TEXT DATABASE March 2012, pages 1139 - 431, XP055201590
- CUI, YONGSHENG ET AL.: 'A Graphical Design and Implementation of Report Tool' INFORMATION TECHNOLOGY AND INFORMATIZATION April 2012, pages 65 - 68, XP008176972

## Description

### TECHNICAL FIELD

The disclosure relates to the technical field of a report system, and particularly to a report data obtaining method, device and system.

### BACKGROUND

An existing report system generally performs custom development in accordance with a user requirement, and when a user queries report data, only a query condition confined in a report can be input, and a result can only be displayed in accordance with an output way designed in the report. When the user requirement of querying the report data is altered, the custom development of the report is needed to be performed again, this type of report system does not support self-definition of the user. Of course, currently some report systems support the self-definition of the user, this type of report system is generally divided into two types: one type of report system can support simple self-definition, and a scope available for self-definition of the user is limited, and this type of report system can only adjust the query condition, select a query result, and select an output style; another type of report system can support complicated self-definition, the user can design a form, write a complicated query condition, and design a complicated query algorithm and a personalized output style, and the user needs to grasp a complicated secondary development process, with regard to an ordinary user, a technical threshold is high, it is difficult to be grasped, and a development cycle may also be long.

According to US 7,840,600 B1, the present invention enables users to interactively create, customize, and execute reports on data stored in databases using only a web browser. The user can create, customize, and execute reports by selecting various report elements including, for example, data sources, fields, filters, labels, charts, dashboards, and the like.

### SUMMARY

In view of this, a main purpose of an embodiment of the disclosure is to provide a report data obtaining method, device and system, which can support creation of a complicated report template, without involving a complicated secondary development process and writing a secondary development script.

The features of the method and device according to the present disclosure are defined in the independent claims, and the preferable features according to the present invention are defined in the dependent claims.

The report data obtaining method, device and system, provided by the disclosure, perform abstraction processing on a data table in a database, and create an ADR model; create a report template according to the ADR model, and store the report template; and call the created report template, execute a report query operation, and display a report query result. This kind of report creation based on the ADR model, can create a complicated report template, without involving a complicated secondary development process and writing a secondary development script.

### BRIEF DESCRIPTION OF THE DRAWINGS

Fig. 1 is a schematic flowchart of a report data obtaining method provided by an embodiment of the disclosure;
Fig. 2 is a schematic structural diagram of an ADR model provided by an embodiment of the disclosure;
Fig. 3 is a schematic diagram of a report data obtaining system provided by an embodiment of the disclosure;
Fig. 4 is a schematic flowchart of creating a report template provided by an embodiment of the disclosure;
Fig. 5 is a schematic flowchart of querying a report template provided by an embodiment of the disclosure; and
Fig. 6 is a schematic flowchart of a drill query provided by an embodiment of the disclosure.

### DETAILED DESCRIPTION

A technical scheme of the disclosure is further explained in detail below in combination with the drawings and specific embodiments.

A method adopted by an embodiment of the disclosure, primarily performs model creation on a data table in a database, describes the data table in the database through an abstract data model, this abstract database model is called an Abstract Data Record (ADR) model for short, the ADR model may be conceived as describing the data table in the database from a service perspective, and this model shall face a report user and can be understood by the report user.

After the ADR model is created, a user can create several report templates according to the ADR model. After the report template is created, the user can select the report template to perform a report data query. Primarily a query condition set in the report template is filled in, and then a structured query language is automatically constructed according to the input query condition, a query result, namely report data, is obtained by querying the data table from the database, and the queried report data is displayed according to an output way set in the report template.

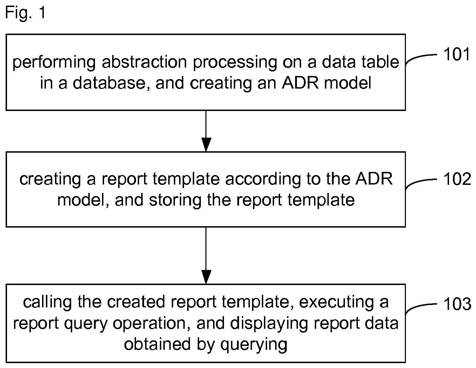

A report data obtaining method provided by the embodiment of the disclosure, as shown in Fig. 1, includes:
Step 101: performing abstraction processing on a data table in a database, and creating an ADR model;
Step 102: creating a report template according to the ADR model, and storing the report template; and
Step 103: calling the report template, executing a report query operation, and displaying report data obtained by querying.

The above technical scheme of the embodiment of the disclosure is explained in detail below.

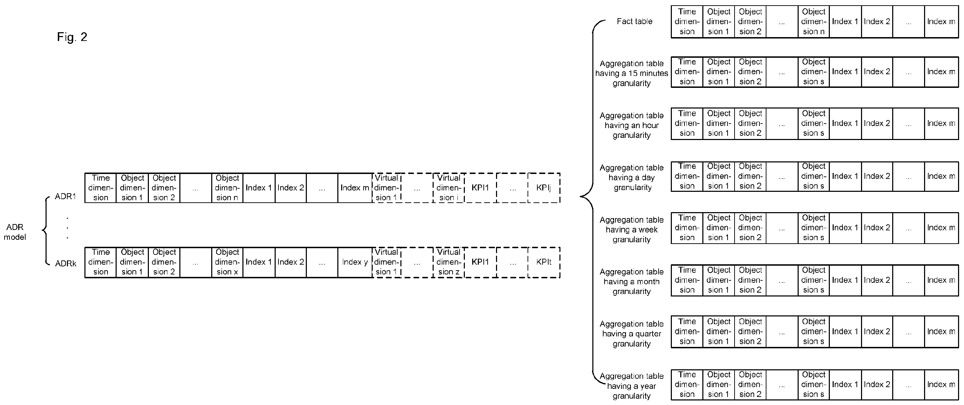

Fig. 2 is a schematic structural diagram of an ADR model.

One ADR model is composed of one or more ADRs; each ADR contains two types of basic elements: a dimension and an index (in order to easily distinguish the dimension and the index from a subsequently extended dimension and index, here the dimension and the index are called a basic dimension and a basic index separately), wherein the basic dimension may also be divided into a time dimension and an object dimension.

Preferably, in order to meet a requirement of creating a complicated report, based on two types of basic elements, namely the basic dimension and the basic index, a virtual dimension and a Key Performance Indicator (KPI) may separately extended. Then the dimension subsequently described by the embodiment of the disclosure contains the basic dimension and the virtual dimension, and the index contains the basic index and the KPI.

Wherein the virtual dimension is an extension of the dimension, and may be divided into a combined dimension, a self-defined dimension, a dimension group and a sub-dimension. The so-called combined dimension is referred to combining existing dimensions to form a new dimension, for example a Mobile Country Code (MCC) and a Mobile Network Code (MNC) may be combined as a virtual dimension Public Land Mobile Network (PLMN). The so-called self-defined dimension may implement translation of the existing dimension through some system functions, for example Internet Protocol Version 4 (IPV4(IP)), wherein the IPV4 is the system function, and represents translating an IP dimension (hexadecimal) into an IPV4 string address, or formatting the dimension by concatenating strings; for example YEAR(time)+'-'+MONTH(time), wherein YEAR is the system function, and represents extracting year information from the time dimension, and wherein MONTH is also the system function, and represents extracting month information from the time dimension, if a value of time is September 8th, 2012, 15:39:30, then the value corresponding to this virtual dimension above is a string "2012-09". The so-called dimension group is referred to taking several dimensions (including the virtual dimension) as a group; when taking the dimension group as the query condition, and when executing report query, only one dimension in this dimension group can be selected as the query condition; when the dimension group is taken as output content, and when executing the report query, one dimension in this dimension group must and can only be selected as the output content. Through the dimension group, multiple report templates can be combined into one template. The so-called sub-dimension is referred to associating the dimension in the ADR with other dimension tables, for example a terminal type dimension in the ADR can be associated with a terminal manufacturer or an operation system in a terminal type dimension table, so that index analysis of the terminal manufacturer or the operation system may be implemented, and the terminal type dimension is the sub-dimension of a terminal manufacturer dimension.

The KPI is divided into a common KPI, a ratio KPI and a statistic KPI. The common KPI is referred to performing four arithmetic operations on an index of the same ADR, the four arithmetic operations of the index is a commonly used KPI, for example a success rate KPI is obtained by calculating success number/(success number + failure number). The radio KPI is used to calculate a comparison situation between a certain index of a certain dimension and the same index of other dimensions in the same type, for example a user traffic radio is a percentage of a sum of all user traffic accounted for by certain user traffic. The statistic KPI is a statistic of an amount of a certain dimension, for example a server user amount is the statistic of the user using various services.

Each ADR contains a data source name attribute, and describes a data source in which the data table associated with the ADR is stored, such as the database. Through this way, the data table may be stored in several data sources, to avoid a performance bottleneck and a capacity bottleneck caused when all data are stored in one data source. When executing the report template to query the data table, a system automatically connects the data source of the ADR corresponding to the report template, and executes the structured query language to obtain the report data.

The ADR model describes the data table in the database from the service perspective, and therefore each ADR must associate with several data tables in the database. Each basic dimension and each basic index in the ADR separately correspond to a certain specific field of the data table; no field in the data table corresponds to the virtual dimension and the KPI, but the both the virtual dimension and the KPI are obtained by performing operation and processing on the field in the data table.

The data table associated with the ADR may be divided into two types: a fact table and an aggregation table. The field of the fact table covers all the basic dimensions and the basic indexes in the ADR model, and the fact table describes a maximum amount of information. In order to improve query efficiency, a concept of the aggregation table is introduced, and the data in the aggregation table are obtained by aggregating the data in the fact table. In the same way, in order to improve the query efficiency, a corresponding aggregation table may be created separately aiming at different granularities. It can be shown in Fig. 2 that one ADR can at most associate with the aggregation table having 7 kinds of granularities (a 15 minutes granularity, an hour granularity, a day granularity, a week granularity, a month granularity, a quarter granularity, and a year granularity). Not all ADRs associate the aggregation table having so many granularities. When the user queries the report data, the system queries the aggregation table having a corresponding granularity in priority according to a report granularity, and if the aggregation table having the corresponding granularity does not exist, the system may automatically query the aggregation table having a small granularity. For example, the aggregation table associated with the ADR only has the 15 minutes granularity and the hour granularity, if the user queries a day granularity report, the system queries the data of the day granularity report from the aggregation table having the hour granularity.

Considering that a data volume in the data table is large, the data volume of each data table may be reduced in a table distribution way, so as to improve the query efficiency. Table distribution is generally performed on the fact table in accordance with a day; the table distribution is generally performed on the aggregation table having the 15 minutes granularity in accordance with the day; the table distribution is generally performed on the aggregation table having the hour granularity in accordance with a week; the table distribution is generally performed on the aggregation table having the day granularity in accordance with a month; the table distribution is generally performed on the aggregation table having the week granularity in accordance with a year; the table distribution is generally performed on the aggregation table having the month granularity in accordance with the year; the table distribution is not necessarily performed on the aggregation table having the quarter granularity and the aggregation table having the year granularity. When the system queries the report data, a corresponding data table is selected according to the queried granularity and a time scope, and if time for querying crosses multiple data tables, a union query is needed to be performed on multiple data tables.

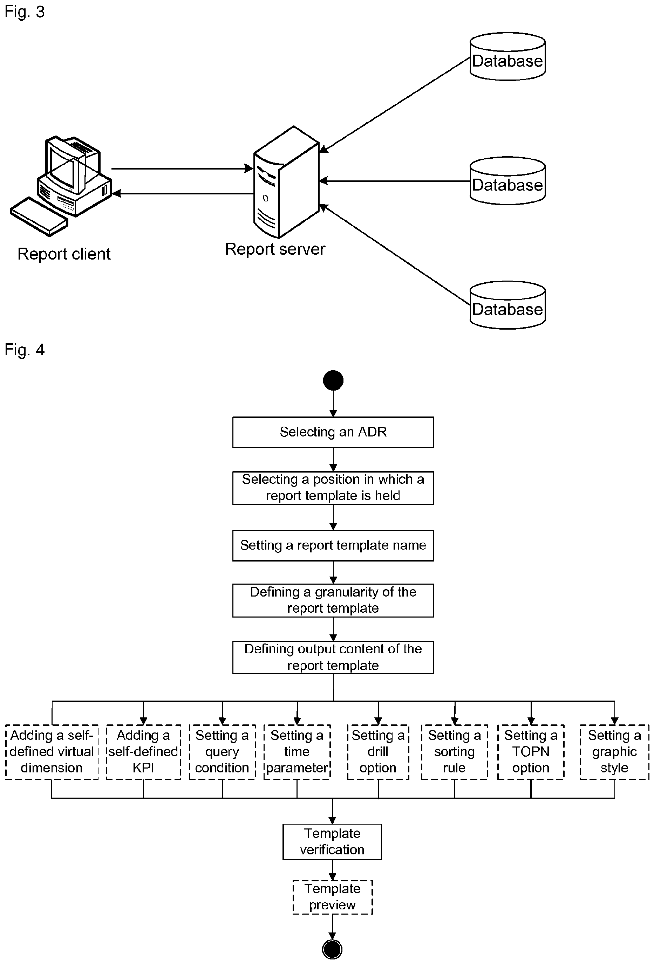

Fig. 3 is a schematic diagram of a report data obtaining system provided by an embodiment of the disclosure, this system is composed of three parts: a report client, a report server and a database. Wherein a B/S framework is adopted between the report client and the report server, and a report client program adopts a form of a swf file, and is deposited on the report server. A flash player and a web browser are needed to be installed in the report client, and the web browser of the report client downloads the swf file from the report server, a client program is operated locally through the flash player. The report client provides three main functions, namely creating the report template (referring to a user operation), inputting a report query condition, and outputting a report query result.

The report server is in charge of creating and storing the report template according to the user operation, and executing the report query operation. During a report query process, the report server dynamically connects the database through an Open Database Connectivity (ODBC) way.

In order to support querying of massive data, the report server support access of multiple databases, the report data corresponding to different ADRs may be stored in different databases.

Specifically, when creating a report, the functions of three parts of the above system include:
the database is configured to store the data of the data table, to perform the abstraction processing on these data tables, and to create the ADR model;
the report server is configured to create the report template according to the ADR model, and to store the report template; and is further configured to call the created report template, to execute the report query operation in the database, and to return the report data obtained by querying to the report client;
the report client is configured to send a report template creation instruction and a report query operation instruction to the report server; and is further configured to display the report data obtained by the querying.

The report server is further configured to select one ADR associated with the report template to be created from the ADR model in the database, to determine a position of the report template to be created on a navigation tree, and to set a name, the query condition, output content and a default output way of the output content of the report template to be created.

The report server is further configured to set a time parameter, a drill option, a TOPN option, a sorting rule of the output content, and/or an extended output way of the output content of the report template to be created.

The report server is further configured to generate the structured query language according to the input query condition, to query the data of the data table from the database, and to obtain the report data.

The report client is further configured to call the created report template according to a user instruction, to construct a GUI for the user to input the query condition, and to send the query condition input by the user to the report server;
the report server is further configured to perform authentication on the ADR associated with the called report template; and is further configured to obtain a field object which the user is authorized to visit when the authentication is successful, to add the field object into the input query condition to generate a new query condition, and to generate the structured query language according to the new query condition, the output content of the called report template, and the sorting rule of the output content; and is further configured to connect to a corresponding database according to a data source name contained in the ADR associated with the called report template, to execute the structured query language to query and obtain the report data from the corresponding database, and to send the report data to the report client.

Fig. 4 is a process of creating a report template which is provided by an embodiment of the disclosure, and the process includes the following steps:
Step 1: selecting one ADR associated with the report template to be created from the ADR model, wherein each report template must and can only be associated with one ADR.
Step 2: selecting the position of the report template to be created on the navigation tree. Through the navigation tree, management of the created report template may be implemented.
Step 3: setting a name of the report template to be created.
Step 4: setting a granularity of the report template to be created (namely the query condition). Each ADR is configured with the granularity supported by the ADR. There may be multiple granularities configured for the report template, and all granularities of this report template must be greater than or equal to a minimum granularity supported by the ADR. (The granularity here may be set according to a requirement, such as 15 minutes, 30 minutes, 1 hour, 1 day, 1 month, 1 quarter, 1 year, and etc.)
Step 5: setting the output content of the report template to be created. One or more of the basic dimension and the basic index contained in the ADR associated with the report template to be created are selected as the output content.
Step 6: setting the default output way of the output content of the report template to be created, for example a form may be possible.

Through the above 6 steps, a simple report template may be created. If it needs to create a complicated report template, the following steps may be selected for setting.
Optional Operation 1: when setting the output content of the report template, besides the basic dimension and the basic index, one or more of the virtual dimension and the KPI may also be selected as the output content. Parent-child relation setting is performed on one or more dimensions taken as the output content.
Optional Operation 2: when setting the query condition of the report template, one or more of the dimension and/or the index contained in the ADR associated with the report template to be created may be taken as the query condition. (The dimension may include the basic dimension and the virtual dimension; the index may include the basic index and the KPI) Here, each query condition may support a common algorithm such as >, >=, <, <=, =, <>, IN, NOT IN, LL (left fuzzy matching), RL (right fuzzy matching), LIKE (fuzzy matching, which supports a wildcard such as ? and *), and etc. Multiple query conditions may be set in one report template, AND, OR, and NOR operations may be performed between these query conditions. It should be noted that when the index is taken as the query condition, an attribute of this query condition (a precondition or a post-condition) is needed to be set, and the so-called precondition is referred to performing conditional filtering on an original record; the so-called post-condition is referred to performing the conditional filtering on the query result. Whether to be preset and obliged to be selected or not may be set for each query condition. The so-called precondition is referred to the query condition which must be included each time when querying the report, and may be conceived as a specific mandatory condition. By setting the above query condition, the complicated query condition may be supported.
Optional Operation 3: the time parameter, which includes date multiple-selection, time interval selection, a busy hour, and a holiday, is set. If the date multiple-selection is set, data query of discrete dates may be implemented; if the time interval selection is set, the data query of an assigned time interval may be implemented; if the busy hour is set, the data query of the busy hour may be implemented, and the busy hour belongs to specific time interval selection; if the holiday is set, the data query of the holiday may be implemented, the holiday belongs to specific data multiple-selection.
Optional Operation 4: the drill option is set. In order to meet a data analysis requirement of the user, a drill function is needed to be provided. The so-called drill is referred to taking the query result as a condition of a next query, and a problem of positioning the user may be facilitated through this associated query. In a phase of creating the report template, only the dimension supporting the drill is needed to be selected, and a sequence of the drill may be dynamically selected during a drill query process.
Optional Operation 5: the sorting rule is set. Many report data queries need to sort the query result, and when creating the report template, a sorting field may be set. The sorting field is the dimension or the index (namely the output content), multiple sorting fields may be selected, and the sorting rule (an ascending order, a descending order) and the sequence of each sorting field may be set.
Optional Operation 6: the TOPN option is set. Multiple TOPN options may be set for one report template, each TOPN option must be assigned with a parameter: a record number (N in a TOPN), the dimension, the index, and the sorting rule. Wherein the dimension assigned by the TOPN must be taken as the output content of the report template.
Optional Operation 7: the extended output way of the output content, such as a graphic style, is set. A graphic display style adopted in the report data, such as a column chart, a stacked column chart, a tendency chart, a pie chart, an area chart, a radar chart, and a dashboard, may be set by the user. The tendency chart and the column chart support double coordinates and combination.

Through the above 7 optional operations, the user may quickly create a complicated report template, without involving a complicated secondary development process and writing a secondary development script.

After creation of the report template is finished, the report client may perform verification, to verify whether there is something omitted or a design error. After the verification of the report template is passed, the user can preview the query result of this template, and if the user is not satisfied, the report template may be partly modified or re-designed to achieve an effect what you see is what you get.

A creation function of the report template may be provided by the report client, and the designed report template is stored in the report server.

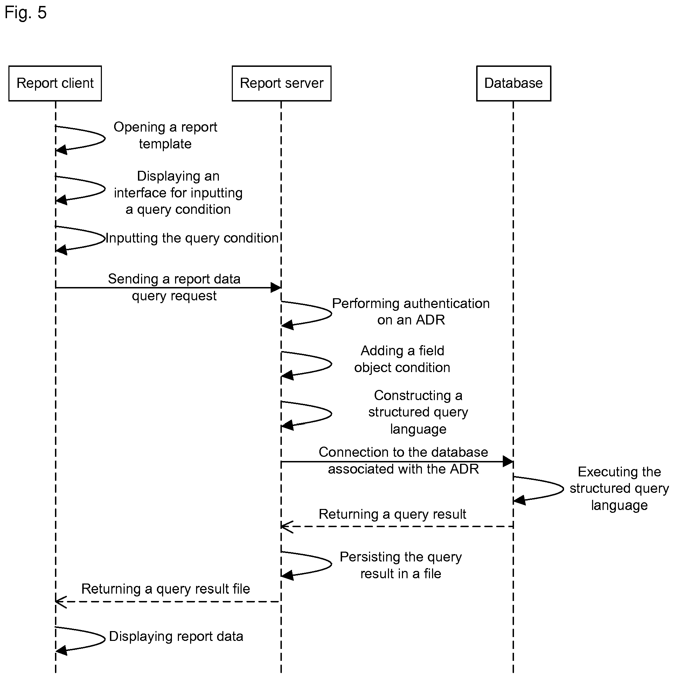

Fig. 5 is a process of querying a report template, a general procedure includes: calling the report template, generating the structured query language according to the input query condition, querying the data of the data table from the database, obtaining and displaying the report data, specifically as shown below:
1. calling the created report template according to the user instruction, and constructing the GUI for the user to input the query condition.
   The user selects a certain created report template on the report client, and executes a query operation through double clicks. The report client constructs the GUI to display the query condition for selection of the user according to the query condition defined in the report template, and the precondition is not displayed in the GUI for the selection of the user. The user inputs the query condition in the GUI, and clicks the query. If the mandatory condition is not input, then an error prompt is returned; otherwise, the next step is executed.
2. The authentication is performed on the ADR visited by the user. Here, the ADR visited by the user is the ADR associated with the called report template.
   The report client sends the query condition input by the user to the report server. The report server primarily perform the authentication on the ADR visited by the user, and if the authentication fails, then the error prompt is returned; otherwise, the next step is executed.
3. The field object which the user is authorized to visit is obtained and added into the input query condition, to generate a new query condition.
   The report server obtains the field object which the current user can visit, and the field object is added into the query condition sent from the report client in an AND operation way, to form the new query condition. The structured query language is generated according to the new query condition, the output content of the called report template, and the sorting rule of the output content.
4. The report server connects to the corresponding database according to the data source name contained in the ADR visited by the user, and executes the structured query language to query and obtain the report data from the database.
5. The report data obtained by querying is displayed according to the output way of the called report template.

The report server makes a result of executing the structured query language, namely the report data returned after querying the database, being persisted in a local file, namely a result file, and sends the result file to the report client. The report client reads the result file returned by the report server, and performs tabular display and graphic rendering according to the output way of the report template.

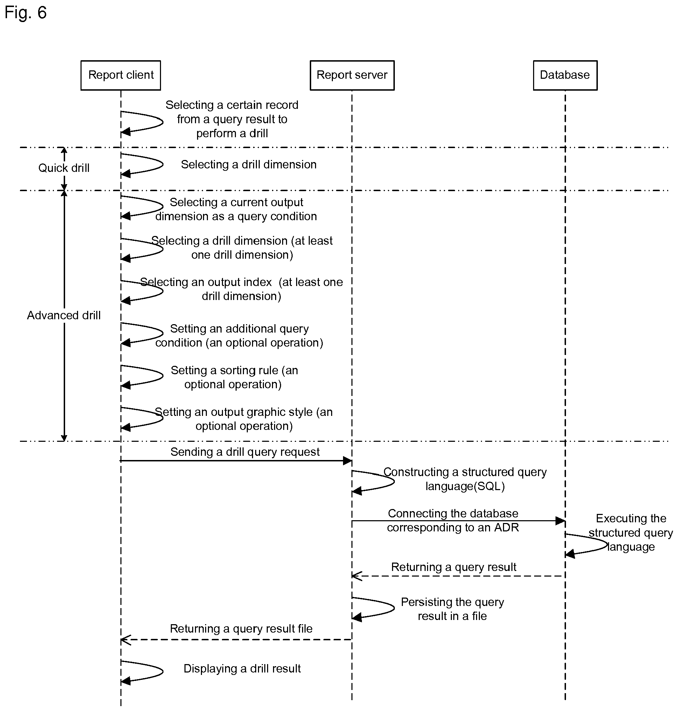

Fig. 6 is the drill query process.

If the report template is configured with the drill option, then the user may select a certain record from the query result to perform a drill query. There are two way for a drill: a quick drill and an advanced drill.

The so-called quick drill is referred to only selecting one dimension as a drill dimension each time. The current query condition and the dimension in a selected record are taken as the condition for the drill query; the drill dimension selected by the user is taken as an output dimension of the drill query; and the index of the current query is taken as an output index of the drill query.

The so-called advanced drill is referred to selecting multiple dimensions as the drill dimension each time. Certain dimensions in the output dimensions of the current query are selected as the query condition; an additional query condition may be added; the output index of the drill query may be assigned; the sorting rule of the result of the drill query may be set; an output graphic style may be set.

After the report client sends a drill query request to the report server, the report server automatically constructs an SQL according to the query condition of the drill, the output dimension, the output index and the sorting rule, and queries the data from the database. The user may perform the drill query on a drill result again. Because the output dimension of the current query (which is taken as the query condition) and a drill output dimension cannot be taken as the drill dimension, therefore each time when the drill is performed, the number of the dimensions available for the drill may be reduced, until no dimension is available for the drill, a drill process is ended.

In conclusion, adopting the method of the embodiment of the disclosure, the user may create the complicated report template. Based on this, the query of the report data and drill analysis of the data are implemented. Through a way of beforehand aggregation and database distribution and table distribution, performance bottleneck of querying massive data is solved; through authority distribution and field distribution, a security problem of the data is solved.

In order to implement the above report data obtaining method, an embodiment of the disclosure further provides a report data obtaining device, which includes: a template creation unit, and a report query unit, wherein
the template creation unit is configured to create a report template according to an ADR model, and to store the report template; the ADR model is obtained by performing the abstraction processing on a data table in a database;
the report query unit is configured to call the created report template, and to execute a report query operation to obtain report data.

The template creation unit is further configured to select one ADR associated with the report template to be created from the ADR model, to determine the position of the report template to be created on a navigation tree, and to set the name, a query condition, output content, and a default output way of the output content of the report template to be created.

The template creation unit is further configured to set a time parameter, a drill option, a TOPN option, a sorting rule of the output content, and/or an extended output way of the output content of the report template to be created.

The report query unit is further configured to generate the structured query language according to the input query condition, and to query data of the data table from the database to obtain the report data.

The report query unit is further configured to perform authentication on the ADR associated with the called report template; and is further configured, when the authentication is successful, to obtain a field object which the user is authorized to visit, to add the field object into the input query condition to generate a new query condition, and to generate the structured query language according to the new query condition, the output content of the called report template, and the sorting rule of the output content; and is further configured to connect to the corresponding database according to a data source name contained in the ADR associated with the called report template, and to execute the structured query language to query the data of the data table from the corresponding database, and to obtain the report data.

In addition, the above template creation unit and the report query unit may be implemented by a Central Processing Unit (CPU), a Micro Processing Unit (MPU), a Digital Signal Processor (DSP), or a Field-Programmable Gate Array (FPGA) in the report data obtaining device.

All those described above are only preferred embodiments of the disclosure, and are not used to limit the scope of protection of the disclosure.

## Claims

1. A report data obtaining method, the method comprising:
performing abstraction processing on a data table in a database, and creating an Abstract Data Record (ADR) model (101);
creating a complicated report template according to the ADR model, and storing the report template (102); and
calling the created report template, executing a report query operation, and obtaining and displaying report data by querying (103);
wherein the created ADR model includes one or more ADRs, each ADR contains two types of basic elements: a basic dimension and a basic index; the basic dimension contains a time dimension and an object dimension; and each ADR contains a data source name;
data of one or more data tables associated with the ADR are stored in the database corresponding to the data source name;
each basic dimension and basic index contained in the ADR separately corresponds to a specific field of one or more data tables associated with the ADR; and
one or more data tables associated with the ADR contain a fact table and an aggregation table; and the aggregation table is obtained by aggregating the fact table.

2. The method according to claim 1, wherein the creating a complicated report template according to the ADR model comprises:
selecting one ADR associated with the report template to be created from the ADR model, and determining a position of the report template to be created on a navigation tree; and
setting a name, a query condition, output content, and a default output way of the output content of the report template to be created;
wherein the creating a report template according to the ADR model further comprises: setting a time parameter, a drill option, a TOPN option, a sorting rule of the output content, and/or an extended output way of the output content of the report template to be created.

3. The method according to claim 1 or 2, wherein
the setting a query condition of the report template to be created comprises: setting a granularity as the query condition, setting one or more granularities of the report template to be created, and making said one or more granularities to be greater than or equal to a minimum granularity supported by the ADR associated with the report template to be created; and
the setting output content of the report template to be created comprises: selecting one or more from a basic dimension and a basic index contained in the ADR associated with the report template to be created as the output content.

4. The method according to claim 3, further comprising:
when setting the output content of the report template to be created, extending the basic dimension contained in the ADR associated with the report template to be created to obtain a virtual dimension; and extending the basic index contained in the ADR associated with the report template to be created to obtain a Key Performance Indicator (KPI);
wherein the virtual dimension contains a combined dimension, a self-defined dimension, a dimension group, and a sub-dimension; and the KPI contains a common KPI, a ratio KPI, and a statistic KPI.

5. The method according to claim 4, wherein the setting the output content of the report template to be created further comprises: selecting one or more from the virtual dimension and the KPI as the output content, and performing parent-child relation setting on one or more dimensions which are taken as the output content; and
wherein one or more dimensions which are taken as the output content comprise the basic dimension and/or the virtual dimension.

6. The method according to claim 4, wherein the setting the query condition of the report template to be created further comprises: taking one or more from a dimension and/or an index contained in the ADR associated with the report template to be created as the query condition; and
wherein the dimension comprises the basic dimension and/or the virtual dimension; and the index comprises the basic index and/or the KPI.

7. The method according to claim 1, wherein the calling the created report template, executing a report query operation, and obtaining and displaying report data by querying comprise: calling the created report template, generating a structured query language according to an input query condition, querying data of the data table from the database, and obtaining and displaying the report data.

8. The method according to claim 7, wherein the calling the report template, generating a structured query language according to an input query condition, querying the data of the data table from the database, and obtaining and displaying the report data comprise:
calling the created report template according to a user instruction, and constructing a Graphical User Interface (GUI) for a user to input a query condition;
performing authentication on an ADR associated with the called report template;
when the authentication is successful, obtaining a field object to which the user is authorized to visit, adding the field object into the input query condition to generate a new query condition;
generating the structured query language according to the new query condition, output content of the called report template, and a sorting rule of the output content;
connecting to a corresponding database according to a data source name contained in the ADR associated with the called report template, and executing the structured query language to query the data of the data table from the database to obtain the report data; and
displaying the report data according to an output way of the called report template;
the report data obtaining method further comprising: when setting a drill option to the created report template, performing a drill query on a record in a querying result.

9. A report data obtaining system, the system comprising:
a database, a report client, and a report server, wherein
the database is configured to store data of a data table, to perform abstraction processing on the data table, and to create an Abstract Data Record (ADR) model;
the report server is configured to create a complicated report template according to the ADR model, and to store the report template; and is further configured to call the created report template, to execute a report query operation in the database, and to return report data obtained by querying to the report client; and
the report client is configured to send a report template creation instruction and a report query operation instruction to the report server; and is further configured to display the report data obtained by the querying;
wherein the created ADR model includes one or more ADRs, each ADR contains two types of basic elements: a basic dimension and a basic index; the basic dimension contains a time dimension and an object dimension; and each ADR contains a data source name; data of one or more data tables associated with the ADR are stored in the database corresponding to the data source name; each basic dimension and basic index contained in the ADR separately corresponds to a specific field of one or more data tables associated with the ADR; and one or more data tables associated with the ADR contain a fact table and an aggregation table; and the aggregation table is obtained by aggregating the fact table.

10. The system according to claim 9, wherein
the report server is further configured to select one ADR associated with the report template to be created from the ADR model in the database, to determine a position of the report template to be created on a navigation tree, and to set a name, a query condition, output content, and a default output way of the output content of the report template to be created;
wherein the report server is further configured to set a time parameter, a drill option, a TOPN option, a sorting rule of the output content, and/or an extended output way of the output content of the report template to be created.

11. The system according to claim 9, wherein
the report server is further configured to generate a structured query language according to an input query condition, and to query the data of the data table from the database to obtain the report data.

12. The system according to claim 11, wherein the report client is further configured to call the created report template according to a user instruction, to construct a Graphical User Interface (GUI) for a user to input a query condition, and to send the query condition input by the user to the report server; and
the report server is further configured to perform authentication on the ADR associated with the called report template; and is further configured to obtain a field object which the user is authorized to visit when the authentication is successful, to add the field object into the input query condition to generate a new query condition, and to generate the structured query language according to the new query condition, output content of the called report template and a sorting rule of the output content; and is further configured to connect to a corresponding database according to a data source name contained in the ADR associated with the called report template, and to execute the structured query language to query the data of the data table from the database to obtain the report data, and to send the report data to the report client.

13. A report data obtaining device, the device comprising:
a template creation unit and a report query unit, wherein
the template creation unit is configured to create a complicated report template according to an Abstract Data Record (ADR) model, and to store the report template; and the ADR model is obtained by performing abstraction processing on a data table in a database; and
the report query unit is configured to call the created report template, and to execute a report query operation to obtain report data;
wherein the created ADR model includes one or more ADRs, each ADR contains two types of basic elements: a basic dimension and a basic index; the basic dimension contains a time dimension and an object dimension; and each ADR contains a data source name; data of one or more data tables associated with the ADR are stored in the database corresponding to the data source name; each basic dimension and basic index contained in the ADR separately corresponds to a specific field of one or more data tables associated with the ADR; and one or more data tables associated with the ADR contain a fact table and an aggregation table; and the aggregation table is obtained by aggregating the fact table.

14. The device according to claim 13, wherein
the template creation unit is further configured to select one ADR associated with the report template to be created from the ADR model, to determine a position of the report template to be created on a navigation tree, and to set a name, a query condition, output content, and a default output way of the output content of the report template to be created;
wherein the template creation unit is further configured to set a time parameter, a drill option, a TOPN option, a sorting rule of the output content, and/or an extended output way of the output content of the report template to be created.

15. The device according to claim 13, wherein
the report query unit is further configured to generate a structured query language according to an input query condition, and to query data of the data table from the database to obtain the report data.

16. The device according to claim 15, wherein the report query unit is further configured to perform authentication on an ADR associated with the called report template; and is further configured to obtain a field object which a user is authorized to visit when the authentication is successful, to add the field object into the input query condition to generate a new query condition, and to generate the structured query language according to the new query condition, output content of the called report template and a sorting rule of the output content; and is further configured to connect to a corresponding database according to a data source name contained in the ADR associated with the called report template, and to execute the structured query language to query the data of the data table from the corresponding database to obtain the report data.

## Patentansprüche

1. Verfahren zum Erhalten von Berichtsdaten, wobei das Verfahren aufweist:
Durchführen eines Abstraktionsprozesses an einer Datentabelle in einer Datenbank, und Erzeugen eines Abstract Data Record (ADR) Modells (101);
Erzeugen einer komplizierten Berichtsvorlage gemäß dem ADR Modell, und Speichern der Berichtsvorlage (102); und
Aufrufen der erzeugten Berichtsvorlage, Durchführen einer Berichtsanfrageoperation, und Erhalten und Anzeigen von Berichtsdaten mittels Abfrage (103);
wobei das erzeugte ADR Modell einen oder mehr ADR's umfasst, wobei jeder ADR zwei Typen von Basiselementen enthält: eine Basisdimension und einen Basisindex; die Basisdimension umfasst eine Zeitdimension und eine Objektsdimension; und jeder ADR umfasst einen Datenquellennamen;
Daten von einer oder mehreren Datentabellen, die mit dem ADR assoziiert sind, werden in der Datenbank entsprechend zu dem Datenquellennamen gespeichert;
jede Basisdimension und jeder Basisindex, die in dem ADR separat enthalten sind entsprechen einem spezifischen Feld von einer oder mehr Datentabellen, die mit dem ADR assoziiert sind; und
eine oder mehr Datentabellen, die mit dem ADR assoziiert sind, umfasst eine Faktentabelle und eine Aggregationstabelle; und die Aggregationstabelle wird durch Aggregation der Faktentabelle erhalten.

2. Verfahren nach Anspruch 1, wobei das Erzeugen einer komplizierten Berichtsvorlage gemäß dem ADR Modell aufweist:
Auswahl eines ADR's, der mit der Berichtsvorlage, die ausgehend von dem ADR Modell erzeugt werden soll, assoziiert ist, und Bestimmen einer Position auf der Berichtsvorlage, die erzeugt werden soll, auf einem Navigationsbaum; und
Setzen eines Namens, einer Anfragebedingung, eines Ausgangsinhalts und eines Default-Ausgangs-Wegs des Ausgangsinhalts der Berichtsvorlage, die erzeugt werden soll;
wobei das Erzeugen einer Berichtsvorlage gemäß dem ADR Modell ferner umfasst:
Setzen eines Zeitparameters, einer Drilloption, einer TOPN Option, einer Sortierregel des Ausgangsinhalt und/oder eines ausgedehnten Ausgangswegs des Ausgangsinhalts der Berichtsvorlage, die erzeugt werden soll.

3. Verfahren nach Anspruch 1 oder 2, wobei
das Setzen einer Anfragebedingung der Berichtsvorlage, die erzeugt werden soll, aufweist:
Setzen einer Granularität als die Abfragebedingung, Setzen einer oder mehrerer Granularitäten der Berichtsvorlage, die erzeugt werden soll, und Machen der einen oder mehreren Granularitäten derart, dass sie größer oder gleich einer Mindestgranularität sind, die von dem ADR in Zusammenhang mit der zu erzeugenden Berichtsvorlage gestützt ist; und
das Setzen des Ausgangsinhalts der Berichtsvorlage, die erzeugt werden soll, aufweist:
Auswählen einer oder mehrerer von einer Basisdimension und einem Basisindex, die in dem ADR in Zusammenhang mit der Berichtsvorlage, die erzeugt werden soll, enthalten sind als den Ausgangsinhalt.

4. Verfahren nach Anspruch 3 ferner aufweisend:
beim Setzen des Ausgangsinhalts der Berichtsvorlage, die erzeugt werden soll, Ausdehnen der Basisdimension, die die in dem ADR in Zusammenhang mit der Berichtsvorlage, die erzeugt werden soll, enthalten ist, um eine virtuelle Dimension zu erhalten; und Ausdehnen des Basisindex, der in dem ADR in Zusammenhang mit der Berichtsvorlage, die erzeugt werden soll, enthalten ist, um einen Key Performance Indikator (KPI) zu erhalten;
wobei die virtuelle Dimension eine kombinierte Dimension enthält, eine selbst definierte Dimension, eine Dimensionengruppe und eine Unterdimension; und
der KPI einen gemeinsamen KPI, einen Verhältnis-KPI und einen statistischen KPI enthält.

5. Verfahren nach Anspruch 4, wobei das Setzen des Ausgangsinhalts der Berichtsvorlage, die erzeugt werden soll, ferner aufweist: Auswählen von einer oder mehr aus der virtuellen Dimension und dem KPI als den Ausgangsinhalt, und Durchführen eines Setzens einer Eltern-Kind-Relation an einer oder mehr Dimensionen, die als der Ausgangsinhalt genommen werden; und
wobei eine oder mehrere Dimensionen, die als der Ausgangsinhalt genommen werden Basisdimension und/oder die virtuelle Dimension aufweisen.

6. Verfahren nach Anspruch 4, wobei das Setzen der Anfragebedingung der Berichtsvorlage, die erzeugt werden soll, ferner aufweist: Nehmen einer oder mehrerer aus einer Dimension und/oder eines Indexes, die in dem ADR in Zusammenhang mit der Berichtsvorlage, die erzeugt werden soll, enthalten sind als die Anfragebedingung; und wobei die Dimension aufweist die Basisdimension und/oder die virtuelle Dimension; und wobei der Index aufweist den Basisindex und/oder den KPI.

7. Verfahren nach Anspruch 1, wobei das Aufrufen der erzeugten Berichtsvorlage, Durchführen einer Berichtsanfrageoperation und das Erhalten und Anzeigen von Berichtsdaten mittels Anfragen aufweist: Aufrufen der erzeugten Berichtsvorlage, Erzeugen einer strukturierten Anfragesprache gemäß einer Eingangsanfragebedingung; Anfragen von Daten der Datentabelle von der Datenbank, und Erhalten und Anzeigen der Berichtsdaten.

8. Verfahren nach Anspruch 7, wobei das Aufrufen der Berichtsvorlage, Erzeugen einer strukturierten Anfragesprache gemäß einer Eingangsanfragebedingung, Anfragen der Daten der Datentabelle von der Datenbank und Erhalten und Anzeigen der Berichtsdaten aufweist:
Aufrufen der erzeugten Berichtsvorlage gemäß einer Anwenderinstruktion und Konstruieren einer grafischen Bedieneroberfläche (GUI) für einen Anwender, um eine Anfragebedingung einzugeben;
Durchführen einer Authentifizierung an einem ADR, in Zusammenhang mit der aufgerufenen Berichtsvorlage;
wenn die Authentifizierung erfolgreich ist Erhalten eines Feldobjekts, das der Anwender besuchen darf, Hinzufügen des Feldobjekts zu der Eingangsanfragebedingung, um eine neue Anfragebedingung zu erzeugen;
Erzeugen der strukturierten Anfragesprache gemäß der neuen Anfragebedingung, des Ausgangsinhalts der aufgerufenen Berichtsvorlage und einer Sortierregel des Ausgangsinhalts;
Verbinden mit einer entsprechenden Datenbank gemäß einem Datenquellennamen, der in dem ADR in Zusammenhang mit der aufgerufenen Berichtsvorlage enthalten ist, und Durchführen der strukturierten Anfragesprache, um die Daten der Datentabelle von der Datenbank anzufragen, um die Berichtsdaten zu erhalten; und
Anzeigen der Berichtsdaten gemäß eines Ausgangswegs der aufgerufenen Berichtsvorlage;
wobei das Berichtsdatenerhaltsverfahren ferner aufweist: Wenn eine Drill Option zu der erzeugten Berichtsvorlage gesetzt wird, Durchführen einer Drillanfrage en einen Bericht in einem Anfrageergebnis.

9. Berichtsdatenerhaltsanordnung, wobei die Anordnung aufweist:
Eine Datenbank, einen Berichtsklienten, und einen Berichtsserver, wobei die Datenbank dazu eingerichtet ist, um Daten einer Datentabelle zu speichern, einen Abstraktionsprozess an der Datentabelle vorzunehmen und um ein Abstract Data Record (ADR) Modell zu erzeugen;
der Berichtsserver dazu eingerichtet ist, um eine komplizierte Berichtsvorlage gemäß des ADR Modells zu erzeugen, und die Berichtsvorlage zu speichern;
und ferner dazu eingerichtet ist, die erzeugte Berichtsvorlage aufzurufen, eine Berichtsanfrageoperation in der Datenbank durchzuführen, und Berichtsdaten, die durch die Anfrage erhalten wurden, an den Berichtsklienten zurückzugeben; und
der Berichtsklient dazu eingerichtet ist, um eine Erzeugungsanweisung für eine Berichtsvorlage zu senden und eine Durchführungsvorgabe für eine Berichtsanfrage an den Berichtsserver; und ferner dazu eingerichtet ist, um die Berichtsdaten, die mittels der Anfrage erhalten wurden, anzuzeigen;
wobei das erzeugte ADR Modell wenigstens einen oder mehrere ADR's umfasst, wobei jeder ADR zwei Arten von Basiselementen umfasst: eine Basisdimension und einen Basisindex; wobei die Basisdimension eine Zeitdimension und eine Objektsdimension umfasst; und wobei jeder ADR einen Datenquellennamen enthält; Daten von einer oder mehrerer Datentabellen, die mit dem ADR assoziiert sind in der Datenbank entsprechend dem Datenquellennamen gespeichert werden; jede Basisdimension und Basisindex, die in dem ADR enthalten sind, separat einem spezifischen Feld oder einer oder mehrerer Datentabellen, die mit dem ADR assoziiert sind entspricht; und ein oder mehrere Datentabellen, die mit dem ADR assoziiert sind, eine Faktentabelle und eine Aggregationstabelle enthalten; und die Aggregationstabelle mittels Aggregieren der Faktentabelle erhalten wird.

10. Anordnung nach Anspruch 9, wobei
der Berichtsserver ferner dazu eingerichtet ist, um einen ADR auszuwählen, der mit der Berichtsvorlage, die erzeugt werden soll, assoziiert ist, ausgehend von dem ADR Modell in der Datenbank, um eine Position der Berichtsvorlage, die erzeugt werden soll, auf einem Navigationsbaum zu bestimmen, und um einen Namen zu setzen, eine Anfragebedingung, einen Ausgangsinhalt und einen Defaultausgangsweg des Ausgangsinhalts der Berichtsvorlage, die erzeugt werden soll;
wobei der Berichtsserver ferner dazu eingerichtet ist, einen Zeitparameter zu setzen, eine Drilloption, eine TOPN Option, eine Sortierregel des Ausgangsinhalts, und/oder einen verlängerten Ausgangsweg des Ausgangsinhalts der Berichtsvorlage, die erzeugt werden soll.

11. Anordnung nach Anspruch 9, wobei
der Berichtsserver ferner dazu eingerichtet ist, eine strukturierte Anfragesprache gemäß einer Eingangsanfragebedingung zu erzeugen, und um die Daten der Datentabelle von der Datenbank anzufragen, um die Berichtsdaten zu erhalten.

12. Anordnung nach Anspruch 11, wobei der Berichtsklient ferner dazu eingerichtet ist, die erzeugte Berichtsvorlage gemäß einer Anwenderinstruktion aufzurufen, eine grafische Benutzeroberfläche (GUI) für einen Anwender zu konstruieren, um eine Anfragebedingung einzugeben, und um den Anfragebedingungsinput von dem Anwender zu dem Berichtsserver zu senden; und
wobei der Berichtsserver ferner dazu eingerichtet ist, um eine Authentifizierung an dem ADR, der mit der aufgerufenen Berichtsvorlage assoziiert ist, durchzuführen; und ferner dazu eingerichtet ist, ein Feldobjekt zu erhalten, welches der Anwender besuchen darf, wenn die Authentifizierung erfolgreich ist, um das Feldobjekt in die Inputanfragebedingung einzufügen, um eine neue Anfragebedingung zu erzeugen, und um die strukturierte Anfragesprache gemäß der neuen Anfragebedingung, gemäß Ausgangsinhalt der aufgerufenen Berichtsvorlage und einer Sortierregel des Ausgangsinhalts zu erzeugen; und ferner dazu eingerichtet ist, um eine entsprechende Datenbank gemäß eines Datenquellennamens, der in dem ADR enthalten ist, welcher mit der aufgerufenen Berichtsvorlage assoziiert ist, zu verbinden, und um strukturierte Anfragesprache auszuführen, um die Daten der Datentabelle von der Datenbank anzufragen, um die Berichtsdaten zu erhalten, und um die Berichtsdaten an den Berichtsklienten zu senden.

13. Berichtsdatenerhaltsvorrichtung, wobei die Vorrichtung aufweist:
eine Einheit zum Erzeugen einer Vorlage und eine Einheit für eine Berichtsanfrage, wobei
die Einheit zum Erzeugen einer Vorlage dazu eingerichtet ist, eine komplizierte Berichtsvorlage gemäß eines Abstract Data Record (ADR) Modells zu erzeugen, und um die Berichtsvorlage zu speichern; und das ADR Modell durch Durchführung eines Abstraktionsprozesses an einer Datentabelle in einer Datenbank erhalten wird, und
die Einheit für eine Berichtsanfrage dazu eingerichtet ist, um die erzeugte Berichtsvorlage aufzurufen, und um eine Berichtsanfrageoperation durchzuführen, um Berichtsdaten zu erhalten;
wobei das erzeugte ADR Modell einen oder mehrere ADR's umfasst, wobei jeder ADR zwei Typen von Basiselementen enthält: eine Basisdimension und einen Basisindex; die Basisdimension enthält eine Zeitdimension und eine Objektdimension; und jeder ADR enthält einen Datenquellennamen; Daten von einer oder mehreren Datentabellen, die mit dem ADR assoziiert sind, in der Datenbank gemäß dem Datenquellennamen gespeichert werden; jede Basisdimension und Basisindex, die in dem ADR enthalten sind, separat mit einem spezifischen Feld einer oder mehrerer Datentabellen, die mit dem ADR assoziiert sind, entsprechen; und eine oder mehrere Datentabellen, die mit dem ADR assoziiert sind, eine Faktentabelle und eine Aggregationstabelle enthält; und
die Aggregationstabelle durch Aggregation der Faktentabelle erhalten wird.

14. Vorrichtung nach Anspruch 13, wobei
Die Einheit zum Erzeugen einer Vorlage ferner dazu eingerichtet ist einen ADR, der mit der Berichtsvorlage assoziiert ist, auszuwählen, um von dem ADR Modell erzeugt zu werden, eine Position der Berichtsvorlage, die erzeugt werden soll, auf einem Navigationsbaum zu bestimmen, und um einen Namen zu setzen, eine Anfragebedingung, einen Ausgangsinhalt und einen Defaultausgangsweg des Ausgangsinhalts der Berichtsvorlage, die erzeugt werden soll; wobei die Einheit zum Erzeugen einer Berichtsvorlage ferner dazu eingerichtet ist, einen Zeitparameter zu setzen, eine Drilloption, eine TOPN Option, eine Sortierregel des Ausgangsinhalts, und/oder einen ausgedehnten Ausgangsweg des Ausgangsinhalts der Berichtsvorlage, die erzeugt werden soll.

15. Vorrichtung nach Anspruch 13, wobei
die Einheit zur Berichtsanfrage ferner dazu eingerichtet ist, eine strukturierte Anfragesprache gemäß einer Inputanfragebedingung zu erzeugen, und um Daten von der Datentabelle von der Datenbank abzufragen, um die Berichtsdaten zu erhalten.

16. Vorrichtung nach Anspruch 15, wobei die Einheit zur Berichtsanfrage ferner dazu eingerichtet ist, eine Authentifizierung an einem ADR durchzuführen, der mit der aufgerufenen Berichtsvorlage assoziiert ist; und ferner dazu eingerichtet ist; ein Feldobjekt zu erhalten, das ein Anwender besuchen darf, wenn Authentifizierung erfolgreich ist, um das Feldobjekt in die Inputanfragebedingung einzufügen, um eine neue Anfragebedingung zu erzeugen, und um die strukturierte Anfragesprache gemäß der neuen Anfragebedingung, Ausgangsinhalt der aufgerufenen Berichtsvorlage und eine Sortierregel des Ausgangsinhalts zu erzeugen; und ferner dazu eingerichtet ist, um mit einer entsprechenden Datenbank sich zu verbinden gemäß eines Datenquellennamens, der in dem ADR enthalten ist, der mit der aufgerufenen Berichtsvorlage assoziiert ist, und um die strukturierte Anfragesprache durchzuführen, um die Daten der Datentabelle von der entsprechenden Datenbank anzufragen, um die Berichtsdaten zu erhalten.

## Revendications

1. Procédé de création des données de rapport, le procédé comprenant :
l'exécution d'un traitement d'abstraction sur une table de données dans une base de données, et la création d'un modèle abstrait de fiche de données (ADR) (101),
la création d'un modèle de rapport complexe sur la base du modèle ADR, et l'enregistrement du modèle de rapport (102) ; et
l'appel du modèle de rapport créé, l'exécution d'une opération de requête de rapport, et l'obtention et l'affichage des données de rapport suite à la requête (103) ;
dans lequel le modèle ADR créé comprend un ou plusieurs ADRs, chaque ADR contient deux types d'éléments de base : une dimension de base et un indice de base, la dimension de base contient une dimension temps et une dimension objet, et chaque ADR contient un nom de source de données ;
des données d'une ou de plusieurs tables de données associées à l'ADR sont enregistrées dans la base de données correspondant au nom de source de données ;
chaque dimension de base et indice de base contenu dans l'ADR correspond individuellement à un champ spécifique d'une ou de plusieurs tables de données associées à l'ADR ; et
une ou plusieurs tables de données associées à l'ADR contiennent une table de faits et une table d'agrégation ; et la table d'agrégation est obtenue par agrégation de la table de faits.

2. Procédé selon la revendication 1, dans lequel la création d'un modèle de rapport complexe sur la base du modèle ADR comprend :
la sélection d'un ADR associé au modèle de rapport à créer à partir du modèle ADR, et la détermination d'une position du modèle de rapport à créer sur un arbre de navigation ; et
le paramétrage d'un nom, d'une condition de requête, du contenu de sortie et d'un mode de sortie par défaut du contenu de sortie du modèle de rapport à créer ;
dans lequel la création d'un modèle de rapport selon le modèle ADR comprend en outre : le paramétrage d'un paramètre de temps, d'une option de forage, d'une option TOPN, d'une règle de tri du contenu de sortie et/ou d'un mode de sortie étendu du contenu de sortie du modèle de rapport à créer.

3. Procédé selon la revendication 1 ou 2, dans lequel
le paramétrage d'une condition de requête pour le modèle de rapport à créer comprend : le paramétrage d'une granularité comme condition de la requête, le paramétrage d'une ou de plusieurs granularités pour le modèle de rapport à créer, et l'agrandissement de ladite une ou desdites plusieurs granularités pour les rendre supérieures ou égales à une granularité minimale supportée par l'ADR associé au modèle de rapport à créer ; et
le paramétrage du contenu de sortie du modèle de rapport à créer comprend : la sélection d'un ou plusieurs d'une dimension de base et d'un indice de base contenus dans l'ADR associé au modèle de rapport à créer comme contenu de sortie.

4. Procédé selon la revendication 3, comprenant en outre :
lors du paramétrage du contenu de sortie du modèle de rapport à créer, l'extension de la dimension de base contenue dans l'ADR associé au modèle de rapport à créer pour obtenir une dimension virtuelle ; et l'extension de l'indice de base contenu dans l'ADR associé au modèle de rapport à créer pour obtenir un Indicateur de Performance Clé (KPI) ;
dans lequel la dimension virtuelle contient une dimension combinée, une dimension autodéfinie, un groupe de dimensions, et une sous-dimension ; et le KPI contient un KPI commun, un rapport de KPI et un KPI statistique.

5. Procédé selon la revendication 4, dans lequel le paramétrage du contenu de sortie du modèle de rapport à créer comprend en outre : la sélection d'un ou plusieurs de la dimension virtuelle et du KPI comme contenu de sortie, et l'exécution d'une relation parent-enfant avec une ou plusieurs dimensions qui sont utilisées comme contenu de sortie ; et
dans lequel une ou plusieurs dimensions qui sont prises comme contenu de sortie comprend la dimension de base et/ou la dimension virtuelle.

6. Procédé selon la revendication 4, dans lequel le paramétrage de la condition de requête du modèle de rapport à créer comprend en outre : l'utilisation d'un ou plusieurs d'une dimension et/ou d'un indice contenus dans l'ADR associé au modèle de rapport à créer comme condition de requête ; et
dans lequel la dimension comprend la dimension de base et/ou la dimension virtuelle ; et l'indice comprend l'indice de base et/ou le KPI.

7. Procédé selon la revendication 1, dans lequel l'appel du modèle de rapport créé, l'exécution d'une opération de requête de rapport, et l'obtention et l'affichage de données de rapport suite à la requête comprend : l'appel du modèle de rapport créé, la génération d'un langage de requête structuré en fonction d'une condition de requête d'entrée, l'interrogation des données de la table de données de la base de données, et l'obtention et l'affichage des données de rapport.

8. Procédé selon la revendication 7, dans lequel l'appel du modèle de rapport, la génération d'un langage de requête structuré en fonction d'une condition de requête d'entrée, l'interrogation des données de la table de données de la base de données, et l'obtention et l'affichage des données de rapport comprend :
l'appel du modèle de rapport créé selon une instruction de l'utilisateur, et la construction d'une Interface Utilisateur Graphique (GUI) permettant à un utilisateur d'entrer une condition de requête ;
l'exécution de l'authentification sur un ADR associé au modèle de rapport appelé ;
si l'authentification est réussie, l'obtention d'un objet champ que l'utilisateur est autorisé à visiter, l'ajout de l'objet champ à la condition de requête d'entrée pour générer une nouvelle condition de requête ;
la génération du langage de requête structuré selon la nouvelle condition de requête, le contenu de sortie du modèle de rapport appelé, et une règle de tri du contenu de sortie ;
la connexion à une base de données correspondante en fonction d'un nom de source de données contenu dans l'ADR associé au modèle de rapport appelé, et l'exécution du langage de requête structuré pour interroger les données de la table de données de la base de données et obtenir les données de rapport ; et
l'affichage des données de rapport selon un mode de sortie du modèle de rapport appelé ;
le procédé d'obtention de données de rapport comprenant en outre : lors du paramétrage d'une option de forage pour le modèle de rapport créé, l'exécution d'une requête de forage sur un enregistrement dans un résultat de la requête.

9. Système de création de données de rapport, le système comprenant :
une base de données, un client de rapport et un serveur de rapport, dans lequel
la base de données est configurée pour enregistrer des données d'une table de données, exécuter un traitement d'abstraction sur la table de données et créer un modèle abstrait de fiche de données (ADR) ;
le serveur de rapport est configuré pour créer un modèle de rapport complexe selon le modèle ADR et pour enregistrer le modèle de rapport ; et est en outre configuré pour appeler le modèle de rapport créé, pour exécuter une opération de requête de rapport dans la base de données, et pour renvoyer les données de rapport obtenues par la requête au client de rapport ; et
le client de rapport est configuré pour envoyer une instruction de création d'un modèle de rapport et une instruction d'opération d'une requête de rapport au serveur de rapport ; et est en outre configuré pour afficher les données de rapport obtenues par la requête ;
dans lequel le modèle ADR créé comprend un ou plusieurs ADRs, chaque ADR contenant deux types d'éléments de base : une dimension de base et un indice de base ; la dimension de base contient une dimension temps et une dimension objet ; et chaque ADR contient un nom de source de données ; des données d'une ou de plusieurs tables de données associées à l'ADR sont enregistrées dans la base de données correspondant au nom de la source de données ; chaque dimension de base et indice de base contenu dans l'ADR correspond individuellement à un champ spécifique d'une ou de plusieurs tables de données associées à l'ADR ; et une ou plusieurs tables de données associées à l'ADR contiennent une table de faits et une table d'agrégation ; et la table d'agrégation est obtenue par agrégation de la table de faits.

10. Système selon la revendication 9, dans lequel
le serveur de rapport est en outre configuré pour sélectionner un ADR associé au modèle de rapport à créer à partir du modèle ADR dans la base de données, déterminer une position du modèle de rapport à créer dans un arbre de navigation, et paramétrer un nom, une condition de requête, un contenu de sortie, et un mode de sortie par défaut du contenu de sortie du modèle de rapport à créer ;
dans lequel le serveur de rapport est en outre configuré pour paramétrer un paramètre de temps, une option de forage, une option TOPN, une règle de tri du contenu de sortie et/ou un mode de sortie étendu du contenu de sortie du modèle de rapport à créer.

11. Système selon la revendication 9, dans lequel
le serveur de rapport est en outre configuré pour générer un langage de requête structuré selon une condition de requête d'entrée, et interroger les données de la table de données de la base de données pour obtenir les données de rapport.

12. Système selon la revendication 11, dans lequel le client de rapport est en outre configuré pour appeler le modèle de rapport créé selon une instruction de l'utilisateur, pour construire une Interface Utilisateur Graphique (GUI) permettant à un utilisateur d'entrer une condition de requête et pour envoyer la condition de requête saisie par l'utilisateur au serveur de rapports ; et
le serveur de rapport est en outre configuré pour exécuter une authentification sur l'ADR associé au modèle de rapport appelé ; et est en outre configuré pour obtenir un objet champ que l'utilisateur est autorisé à visiter si l'authentification est réussie, pour ajouter l'objet champ à la condition de requête d'entrée pour générer une nouvelle condition de requête, et pour générer le langage de requête structuré selon la nouvelle condition de requête, le contenu de sortie du modèle de rapport appelé et une règle de tri du contenu de sortie ; et est en outre configuré pour se connecter à une base de données correspondante en fonction d'un nom de source de données contenu dans l'ADR associé au modèle de rapport appelé, et pour exécuter le langage de requête structuré pour interroger les données de la table de données de la base de données et obtenir les données de rapport, et pour envoyer les données du rapport au client de rapport.

13. Dispositif de création de données de rapport, le dispositif comprenant :
une unité de création de modèle et une unité de requête de rapport, dans lequel
l'unité de création de modèle est configurée pour créer un modèle de rapport complexe selon un modèle abstrait de fiche de données (ADR) et pour enregistrer le modèle de rapport ;
et le modèle ADR est obtenu par un traitement d'abstraction sur une table de données dans une base de données ; et
l'unité de requête de rapport est configurée pour appeler le modèle de rapport créé et pour exécuter une opération de requête de rapport pour obtenir des données de rapport ;
dans lequel le modèle ADR créé comprend un ou plusieurs ADRs, chaque ADR contenant deux types d'éléments de base : une dimension de base et un indice de base ; la dimension de base contient une dimension temps et une dimension objet ; et chaque ADR contient un nom de source de données ; des données d'une ou de plusieurs tables de données associées à l'ADR sont enregistrées dans la base de données correspondant au nom de source de données ; chaque dimension de base et chaque indice de base contenu dans l'ADR correspond individuellement à un champ spécifique d'une ou de plusieurs tables de données associées à l'ADR ; et une ou plusieurs tables de données associées à l'ADR contiennent une table de faits et une table d'agrégation ; et la table d'agrégation est obtenue par agrégation de la table de faits.

14. Dispositif selon la revendication 13, dans lequel
l'unité de création de modèle est en outre configurée pour sélectionner un ADR associé au modèle de rapport à créer à partir du modèle ADR, déterminer une position du modèle de rapport à créer dans un arbre de navigation, et paramétrer un nom, une condition de requête, un contenu de sortie, et un mode de sortie par défaut du contenu de sortie du modèle de rapport à créer ;
dans lequel l'unité de création de modèle est en outre configurée pour paramétrer un paramètre de temps, une option de forage, une option TOPN, une règle de tri du contenu de sortie et/ou un mode de sortie étendu du contenu de sortie du modèle de rapport à créer.

15. Dispositif selon la revendication 13, dans lequel
l'unité de requête de rapport est en outre configurée pour générer un langage de requête structuré selon une condition de requête d'entrée, et interroger les données de la table de données de la base de données pour obtenir les données de rapport.

16. Dispositif selon la revendication 15, dans lequel l'unité de requête de rapport est en outre configurée pour exécuter une authentification sur un ADR associé au modèle de rapport appelé ; et est en outre configurée pour obtenir un objet champ que l'utilisateur est autorisé à visiter si l'authentification est réussie, pour ajouter l'objet champ à la condition de requête d'entrée pour générer une nouvelle condition de requête, et pour générer le langage de requête structuré selon la nouvelle condition de requête, le contenu de sortie du modèle de rapport appelé et une règle de tri du contenu de sortie ; et est en outre configurée pour se connecter à une base de données correspondante selon un nom de source de données contenu dans l'ADR associé au modèle de rapport appelé, et pour exécuter le langage de requête structuré pour interroger les données de la table de données de la base de données correspondante et obtenir les données de rapport.
